(19) Europäisches Patentamt
European Patent Office
Office européen des brevets

(11) Veröffentlichungsnummer : **0 185 970**
**B1**

(12) # EUROPÄISCHE PATENTSCHRIFT

(45) Veröffentlichungstag der Patentschrift : **24.01.90**

(51) Int. Cl.$^5$ : **A 01 N 59/00** // (A01N59/00, 47:44, 33:12)

(21) Anmeldenummer : **85115248.8**

(22) Anmeldetag : **02.12.85**

(54) **Flüssige Desinfektionsmittelzubereitungen mit Breitbandwirkung.**

(30) Priorität : **15.12.84 DE 3445901**

(43) Veröffentlichungstag der Anmeldung : **02.07.86 Patentblatt 86/27**

(45) Bekanntmachung des Hinweises auf die Patenterteilung : **24.01.90 Patentblatt 90/04**

(84) Benannte Vertragsstaaten :
**AT BE CH DE FR GB IT LI NL**

(56) Entgegenhaltungen :
**EP-A- 0 041 448**
**EP-A- 0 087 049**
**CHEMICAL ABSTRACTS, Band 95, Nr. 22, 30. November 1981, Seite 329, Nr. 192186w, Columbus, Ohio, US; & JP - A - 81 97 598**

(73) Patentinhaber : **Henkel Kommanditgesellschaft auf Aktien**
**Postfach 1100 Henkelstrasse 67**
**D-4000 Düsseldorf-Holthausen (DE)**

(72) Erfinder : **Bansemir, Klaus, Dr.**
**Ursulaweg 51**
**D-4018 Langenfeld (DE)**
Erfinder : **Disch, Karlheinz, Dr.**
**Holbeinstrasse 10**
**D-5657 Haan (DE)**
Erfinder : **Kiewert, Eva, Dr.**
**Am langen Weiher 6**
**D-4000 Düsseldorf 13 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 185 970 B1

## Beschreibung

Die Erfindung betrifft flüssige Wirkstoffzubereitungen zur Verwendung als Desinfektionsmittel mit Breitbandwirkung gegen grampositive und gramnegative Bakterien.

Bei den Mitteln, die für die Flächendesinfektion zur praktischen Anwendung kommen, stehen nach wie vor Aldehyde oder Phenole enthaltende Zusammensetzungen im Vordergrund. Das ist vor allem darauf zurückzuführen, daß aldehydische und phenolische Mittel beim Einsatz in hinreichenden Konzentrationen eine rasche und breite antimikrobielle Wirkung gewährleisten. Sie werden insbesondere im nicht-therapeutischen Bereich, beispielsweise als Flächendesinfektionsmittel für Krankenhäuser, Schulen, Badeanstalten, öffentliche Verkehrsmittel oder in gewerblichen Betrieben wie Schlachthöfen, Molkereien, Brauereien und Wäschereien in großem Umfange eingesetzt. Sie zeigen jedoch den Nachteil, daß ihre Anwendung mit einer Geruchsbelästigung verbunden ist und zu Reizerscheinungen an Augen- und Nasenschleimhäuten führen kann.

Die desinfizierende Wirkung von wäßrigen Wasserstoffperoxidlösungen ist bekannt. Wasserstoffperoxid wäre an sich ein ideales Desinfektionsmittel, das die schädlichen Mikroorganismen oxidativ zerstört und nach dem Gebrauch in vergleichsweise kurzer Zeit zerfällt. Eine problematik liegt allerdings in ihrer vergleichsweisen Instabilität und damit der beschränkten Lager- und Gebrauchsfähigkeit.

Die DE-OS 32 05 318 schildert verbesserte Flüssigkonzentrate des Wasserstoffperoxids zur Verwendung als Desinfektionsmittel, die durch saure Unterlegung mit Phosphorsäure und/oder Phosphorsäuresalzen und die Mitverwendung von Komplexbildnern für Schwermetallionen stabilisiert sind, so daß eine längere Lebensdauer und Gebrauchsdauer der Wasserstoffperoxidkonzentrate gewährleistet ist. Zur Steigerung der bakteriziden Wirkung wird die Mitverwendung von desinfizierend wirkenden quartären Ammoniumverbindungen empfohlen, darüberhinaus können zur Verstärkung der Reinigungswirkung Tenside, insbesondere nichtionische Tenside und/oder Amphotenside mitverwendet werden.

Desinfektionsmittel der in der DE-OS 32 05 318 geschilderten Art zeigen zwar die angestrebte verlängerte Lebens- und Gebrauchsdauer, sie sind auch ausgesprochen wirksam gegenüber grampositiven Bakterien bestimmt an Staphylococcus aureus — siehe hierzu die Richtlinien der DGHM (Deutsche Gesellschaft für Hygiene und Mikrobiologie), beschrieben im Zentralblatt für Bakteriologie Mikrobiologie und Hygiene, 1. Abt. Originale B 172 (1981), Seiten 534 bis 562 und in Hygiene + Medizin 9 (1984), Seiten 41 bis 46. Die vorbeschriebenen Desinfektionsgemische zeigen jedoch eine gewisse Schwäche gegenüber gramnegativen Bakterien und insbesondere gegenüber dem Testkeim Pseudomonas aeruginosa im Keimträgertest nach den zuvor zitierten DGHM-Richtlinien.

Die EP-A-41 448 beschreibt wässrige oder alkoholische Zusammensetzungen mit bakterizider und fungizider Wirkung, die ein oligomeres Chlorhydrat des Hexamethylenbiguanids und eine quartäre Ammoniumverbindung enthalten.

Die Erfindung geht von der Aufgabe aus, flüssige Desinfektionsmittelzubereitungen auf Basis einer mit Komplexbildnern stabilisierten wäßrigen bzw. wäßrig-organischen Mischung von Wasserstoffperoxid und bakterizid wirksamen quartären Ammoniumverbindungen dahingehend weiter zu verbessern, daß insbesondere auch die Wirkung der Mittel gegen gramnegative Bakterien stärker ausgeprägt wird, so daß damit Desinfektionsmittel mit Breitbandwirkung gegen grampositive und gramnegative Bakterien zur Verfügung stehen.

Die Lehre der Erfindung geht von der Feststellung aus, daß durch Mitverwendung einer bestimmt ausgewählten Klasse von stickstoffhaltigen Komponenten mit bakterizider Wirkung eine synergistische Wirkungssteigerung im angestrebten Sinne der Breitbandwirkung erziehlt werden kann.

Gegenstand der Erfindung sind dementsprechend in einer ersten Ausführungsform Desinfektionsmittelkonzentrate mit Breitbandwirkung gegen grampositive und gramnegative Bakterien auf der vorbekannten Basis von wäßrigen bzw. wäßrig-organischen Mischungen von Wasserstoffperoxid und quartären Ammoniumverbindungen, die mit Komplexbildnern stabilisiert sind und gewünschtenfalls weitere Zusatzstoffe enthalten können. Die Lehre der Erfindung ist dadurch gekennzeichnet, daß die neuen Desinfektionsmittelkonzentrate die folgende Stoffkombination enthalten :

1 bis 15 Gewichtsprozent Wasserstoffperoxid
1 bis 15 Gewichtsprozent bakterizid wirksame quartäre Ammoniumverbindungen
0,1 bis 3 Gewichtsprozent Oligo-Hexametylenbiguanidsalze der Formel

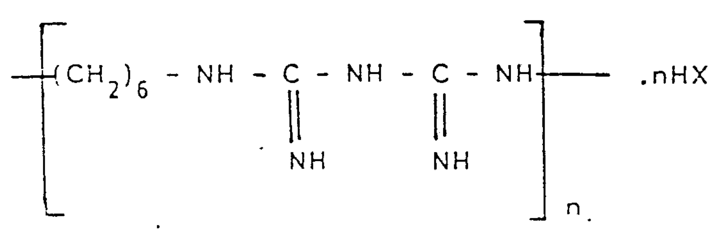

(I)

in der HX die salzbildene Säurekomponente ist und n eine Zahl von wenigstens 3 bedeutet und vorzugsweise so gewählt ist, daß das mittlere Molekulargewicht der Aktivsubstanz etwa 900 bis 1300 beträgt, sowie

0,1 bis 5 Gewichtsprozent Komplexbildner für Schwermetallionen und gewünschtenfalls übliche Zusatzstoffe wie Tenside, Reinigungsverstärker, pH-Regulatoren sowie Duft- und Farbstoffe.

In einer weiteren Ausführungsform betrifft die Erfindung einsatzfertige flüssige Desinfektionsmittelzubereitungen, die durch die folgende Stoffkombination gekennzeichnet sind :

0,5 bis 10 Gewichtsprozent Wasserstoffperoxid

0,01 bis 1 Gewichtsprozent bakterizid wirksame quartäre Ammoniumverbindung

0,01 bis 0,1 Gewichtsprozent- der Oligo-Hexamethylenbiguanidsalze der zuvor angegebenen Formel 1

0,1 bis 5 Gewichtsprozent Komplexbildner für Schwermetallionen, gewünschtenfalls übliche Zusatzstoffe wie Tenside, Reinigungsverstärker pH-Regulatoren, Duft- und Farbstoffe und zum Rest Wasser oder Gemische von Wasser und wassermischbaren Lösungsmitteln.

Entscheidend ist erfindungsgemäß die Mitverwendung der ausgewählten Oligo-Hexamethylenbiguanidsalze der zuvor angegebenen Formel. In dieser Formel hat n vorzugsweise den Wert von etwa 4 bis 6. Als salzbildende Säure HX ist eine Halogenwasserstoffsäure und insbesondere HCl bevorzugt.

Erfindungsgemäße Stoffgemische erfüllen im praktischen Einsatz sämtliche Prüfkriterien der zuvor zitierten DGHM-Richtlinien. Sie wirken also sowohl gegenüber grampositiven Bakterien — bestimmt an Staphylococcus aureus — als auch insbesondere gegenüber gramnegativen Bakterien — bestimmt an Pseudomonas aeruginosa — in ausreichendem Maße. Dieses Ergebnis ist um so überraschender, als der Austausch der erfindungsgemäß eingesetzten Oligo-Hexamethylenbiguanidsalze gegen andere bekannte bakterizid wirksame strukturverwandte Verbindungen den erfindungsgemäß angestrebten Breitbandeffekt nicht liefert. Aus den nachfolgenden Vergleichsbeispielen ist zu ersehen, daß bei der Mitverwendung des strukturverwandten Chlorhexidins, d. h. des 1,1'-Hexamethylen- 5-(4-Chlorphenyl)-biguanids, die erfindungsgemäß angestrebte Breitbandwirkung nicht erreicht wird.

Oligo-Hexamethylenbiguanidsalze der erfindungsgemäß eingesetzten Art sind ansich als antimikrobiell wirksame Komponenten der Literatur bekannt. Verwiesen sei beispielsweise auf die DE-OS 33 34 555. Nicht bekannt war jedoch, daß ihre Mitverwendung in Wirkstoffmischungen, wie sie in der zuvor erwähnten DE-OS 32 05 318 beschrieben sind, zur angestrebten synergistischen Verstärkung der antimikrobiellen Wirkung insbesondere gegen gramnegative Bakterien führt.

Bevorzugte Mengenbereiche für die Wirkstoffe der erfindungsgemäßen Flüssigkonzentrate sind wie folgt : 5 bis 10 Gewichtsprozent Wasserstoffperoxid, 3 bis 10 Gewichtsprozent der quartären Ammoniumverbindungen, 0,2 bis 1,5 Gewichtsprozent der Oligo-Hexamethylenbiguanidsalze und 0,5 bis 5 Gewichtsprozent der Komplexbildner gegen Schwermetallionen.

Bei den gebrauchsfertigen Zubereitungen liegen die bevorzugten Einsatzkonzentrationen wie folgt :

0,5 bis 5 Gewichtsprozent $H_2O_2$

0,05 bis 0,5 Gewichtsprozent quartäre Ammoniumverbindung,

0,02 bis 0,1 Gewichtsprozent der Verbindungen der Formel 1 und

0,5 bis 5 Gewichtsprozent der Komplexbildner

Für die Praxis ist es von Vorteil, wenn Desinfektionsmittel insbesondere aus Gründen der Material- und Hautverträglichkeit weder zu stark sauer noch stark alkalisch eingestellt sind. Die erfindungsgemäßen Flüssigzubereitungen sind bevorzugt auf pH-Werte im Bereich von etwa 3 bis 7, insbesondere im Bereich von etwa 4 bis etwa 7 eingestellt. pH-Werte im schwachsauren Bereich, also insbesondere im Bereich von etwa 4,5 bis 6,5, können besonders bevorzugt sein. Die Einstellung des pH-Wertes erfolgt durch Zusatz von Regulatoren in ansich bekannter Weise, insbesondere durch Zusatz von sauren Verbindungen im Sinne der Offenbarung der DE-OS 32 05 318. In Betracht kommt hier also beispielsweise der Zusatz von sauren Phosphorverbindungen, insbesondere Phosphorsäure oder sauren Phosphorsäuresalzen wie Natriumdihydrogenphosphat, Kaliumdihydrogenphosphat und/oder Ammoniumdihydrogenphosphat. Die zugesetzten Mengen bemessen sich einerseits durch den angestrebten pH-Wert des Flüssigkonzentrates, andererseits durch die darin mitverwendeten Komponenten. Im Rahmen der Erfindung kann es wünschenswert sein, nur beschränkte Mengen der sauren Phosphorverbindungen einzusetzten, die beispielsweise im Bereich von 0,1 bis 10 Gewichtsprozent und insbesondere unter 5 Gewichtsprozent liegen können. Tatsächlich können auch schon mit Zusatzmengen im Bereich von 0,1 bis 1 Gewichtsprozent an saurer Phosphorverbindung hinreichende Wirkungen für die Gesamtwirkung des Desinfektionsmittelkonzentrates erreicht werden. Geeignete andere Säuerungsmittel sind beispielsweise Borsäure und Zitronensäure.

Zur Stabilisierung des Wasserstoffperoxides enthält das erfindungsgemäße Konzentrat einen gegenüber Schwermetallionen wirksamen Komplexbildner. Für diesen Zweck besonders geeignete Komplexbildner sind Alkanpolyphosphonsäure, Amino- und Hydroxyalkanpolyphosphonsäuren und

Phosphonocarbonsäuren, beispielsweise Methandiphosphonsäure, 1-Aminoethan-1,1-Diphosphonsäure, (Aminotri-methylenphosphonsäure), Ethylendiamintretra-(methylenphosphonsäure), Hydroxyethan-1,1.-Diphosphonsäure und 2-Phosphonobutan-1,2,4-Tricarbonsäure oder Aminopolycarbonsäuren ; beispielsweise Nitrilotriessigsäure, Ethylendiamintetraessigsäure oder Hydroxyethylendiamintriessigsäure sowie die Alkalisalze der genannten Säuren. Ein weiterer geeigneter Komplexbildner ist im erfindungsgemäßen Sinne die Phytinsäure.

Desinfizierend wirkende quartäre Ammoniumverbindungen sind im Rahmen der Lehre der Erfindung insbesondere solche, die neben einen langkettigen aliphatischen und 2 kurzkettigen aliphatischen Kohlenwasserstoffresten einen aromatischen, über ein aliphatisches Kohlenstoffatom mit dem Stickstoffatom verknüpften, oder einen aliphatische Doppelbindungen aufweisenden Kohlenwasserstoffrest im Molekül enthalten. Beispiele für derartige antimikrobielle Ammoniumverbindungen sind Dimethylbenzyldodecyl-ammoniumchlorid, Dimethyl-benzyl-tetradecylammoniumchlorid, Dimethyl-(ethylbenzyl)-dodecylammoniumchlorid, Dimethyl-benzyl-decylammoniumbromid, Dimethyl-benzyl-octylammoniumchlorid, Methyl-ethyl-benzyl-dodecylammoniumchlorid, Dibutyl-allyldodecylammonium-chlorid, Ethyl-cyclohexylallyl-dodecylammoniumchlorid, Ethyl-crotyl-(diethylaminoethyl)-dodecylammoniumchlorid und insbesondere Kokosalkyl-dimethyl-benzylammoniumchlorid, in dem sich der Kokosalkylrest von dem hydrierten Fettsäuregemisch des Kokosöls ableitet. Dimethyldidecylammoniumchlorid ist ebenfalls wirksam.

Wenn neben der antimikrobiellen Wirkung eine zusätzliche Reinigungswirkung erwünscht ist, können die erfindungsgemäßen Flüssigkonzentrate Tenside ggf. in Kombination mit reinigungsverstärkenden Zusätzen enthalten. Solche Tenside bzw. Tensidgemische liegen bevorzugt in Mengen bis zu etwa 20 Gewichtsprozent vor. In Betracht kommen als Tenside insbesondere nichtionische Tenside und/oder Amphotenside. Als nichtionische Tenside kommen Anlagerungsprodukte von 4 bis 40, vorzugsweise 4 bis 20 Mol Ethylenoxid an 1 Mol Fettalkohol, Alkylcyclohexanol, Alkylphenol, Fettsäure, Fettamin, Fettsäureamid oder Alkansulfonamid in Betracht. Von besonderem Interesse sind Anlagerungsprodukte von 5 bis 16 Mol Ethylenoxid an Kokos- oder Talgfettalkohole, an Oleyalkohol und an Mono-, Di- oder Tri-alkylphenole sowie Monoalkylcyclohexanole mit 6 bis 14 Kohlenstoffatomen in den Alkylresten. Als Amphotenside kommen die Derivate von sekundären oder tertiären aliphatischen Aminen in Frage, wobei die aliphatischen Reste geradkettig oder verzweigt sein können und ein Rest 8 bis 18 Kohlenstoffatome und ein anderer eine löslichmachende anionische Gruppe, beispielsweise eine Carboxy-, Sulfo-, Sulfato-, Phosphato- oder Phosphonogruppe enthält.

Reinigungsverstärker im Sinne der Erfindung sind die entsprechenden bekannten polymeren Komponenten, beispielsweise Zellulosederivate, polymere Ethylenglykole und dergleichen.

Als Lösungsmittel für die flüssigen Zubereitungen dienen Wasser und Gemische aus Wasser und solchen organischen Lösungsmitteln, die mit Wasser mischbar sind. Geeignet sind insbesondere niedere Alkohole wie Methanol, Ethanol, Propanol und/oder Isopropanol, sowie Ethylenglykol- und/oder Propylenglykolmonoalkylether.

Neben den genannten Komponenten können die erfindungsgemäßen Konzentrate weiter in flüssigen Desinfektionsmitteln übliche Bestandteile enthalten, beispielsweise Farb- und Duftstoffe.

Für die Verwendung in der Desinfektion, insbesondere in der Flächendesinfektion, können die gebrauchsfertigen Zubereitungen unmittelbar eingesetzt werden, während die erfindungsgemäßen Konzentrate mit Wasser zu Lösungen verdünnt werden, die üblicherweise 0,1 bis 5 Gewichtsprozent Konzentrat und insbesondere etwa 0,5 bis 3 Gewichtsprozent Konzentrat enthalten. Mit den erfindungsgemäßen Wirkstoffkombinationen ist es dabei möglich Produkte herzustellen, die allen Anforderungen der DGHM-Richtlinien entsprechen, d. h. den qualitativen und quantitativen Subspensionstest, den Keimträgertest und den quantitativen Flächentest erfüllen — vergl. die eingangs zitierte Literatur —.

## Beispiele

### Beispiele 1 bis 4

Zum Beweis der synergistischen Wirkung der beanspruchten Wirkstoff-Kombinationen wurden in einer Grundrezeptur die Desinfektionskomponenten variiert (Gehaltsangaben in Gew.-% aktive Substanz) und im Keimträgertest Ps. aeruginosa sowie gegen Staph. aureus geprüft.

(Siehe Tabelle Seite 5 f.)

| | 1 | 2 | 3 erfindungsgemäß | 4 |
|---|---|---|---|---|
| $H_2O_2$ | 7 | 7 | 7 | 7 |
| Benzyl-dimethyl-$C_{12-14}$-Alkyl-ammoniumchlorid | 5 | - | 4,5 | 4,5 |
| Oligo-hexamethylen-biguanidsalz | - | - | 0,5 | - |
| Chlorhexidin | - | 5 | - | 0,5 |
| EDTA | 1 | 1 | 1 | 1 |
| Nonylphenol + 10 EO | 8 | 8 | 8 | 8 |
| Polyethylenoxid MG 600.000 | 0,1 | 0,1 | 0,1 | 0,1 |
| Mono-Na-Phosphat | 0,36 | 0,36 | 0,36 | 0,36 |
| Isopropanol | 4,8 | 4,8 | 4,8 | 4,8 |
| Wasser | ad 100 | ad 100 | ad 100 | ad 100 |
| pH. unverd. Produkt | 6 | 6 | 6 | 6 |
| Wirksamkeit im Keimträgertest nach DGHM | | | | |
| Ps. aerugin. Verdünnung | 4 % | 4 % | 2 % | 4 % |
| Minuten | >120 | >120 | 120 | >120 |
| Staph. aureus Verdunnung | 1 % | 1 % | 1 % | 1 % |
| Minuten | 120 | >120 | 60 | 120 |

Wie aus der Tabelle ersichtlich ist, erfüllen die Beispiele 1 und 2 den Keimträgertest gegen Ps. aeruginosa selbst bei Einsatzkonzentrationen von 4 % nicht, dagegen das erfindungsgemäße Beispiel 3 bereits bei 2 %. Auch eine Kombination von QAV + Chlorhexidin + $H_2O_2$, wie in Beispiel 4, war bei 4 % unwirksam. Auch gegen Staph. aureus erwies sich das erfindungsgemäße Beispiel 3 als das wirksamste.

Ergänzend wurden die Beispiele 3 und 4 im quantitiven Suspensionstest DGHM-81 gegen Ps. aeruginosa geprüft, und zwar sowohl mit als auch ohne Eiweißbelastung, mit folgendem Ergebnis :

Angabe der Keimreduktion (log.) nach Einwirkungszeiten in Minuten

| | Verdünnung | ohne Eiweißbelastung | | | mit 2% Rinderalbumin | | |
|---|---|---|---|---|---|---|---|
| | in % | Minuten | | | Minuten | | |
| | | 5 | 30 | 60 | 5 | 30 | 60 |
| Beispiel 3 | 0,5 | 3,1 | 6,6 | 6,6 | 1,4 | 5,4 | 6,6 |
| (erfindungsgemäß) | 0,25 | 0,9 | 4,4 | 5,9 | 0,4 | 1,8 | 2,8 |
| Beispiel 4 | 0,5 | 3,1 | 6,6 | 6,6 | 0,8 | 2,6 | 2,7 |
| (Vergleich) | 0,25 | 1,4 | 3,3 | 4,3 | 0,1 | 1,8 | 1,8 |

Das erfindungsgemäße Beispiel erfüllt bei einer Verdünnung auf 0,5 % die Anforderungen nach DGHM sowohl mit als auch ohne Eiweißbelastung, während Beispiel 4 unter Albuminbelastung versagt.

Beispiel 5

Ein gebrauchsfertiges Desinfektionsmittel hat folgende Zusammensetzung :

5,0 % $H_2O_2$
0,5 % Nonylphenol + 10 EO
0,2 % Benzyl-dimethyl-$C_{12}$/$C_{14}$-alkylammoniumchlorid
0,02 % Vantocil IB
2,0 % Isopropanol
0,5 % EDTA
0,01 % Polyethylenoxid, MG 600 000
0,18 % $H_3PO_4$
Rest Wasser vollentsalzt

pH-Wert, unverdünntes Produkt : 6

## Patentansprüche

1. Desinfektionsmittelkonzentrat mit Breitbandwirkung gegen grampositive und gramnegative Bakterien auf Basis einer mit Komplexbildnern stabilisierten wäßrigen bzw. wäßrig-organischen Mischung von Wasserstoffperoxid mit quartären Ammoniumverbindungen und gewünschtenfalls weiteren Zusatzstoffen, dadurch gekennzeichnet, daß es
1 bis 15 Gewichtsprozent Wasserstoffperoxid
1 bis 15 Gewichtsprozent bakterizid wirksame quartäre Ammoniumverbindungen
0,1 bis 3 Gewichtsprozent Oligo-Hexamethylenbiguanidsalze der allgemeinen Formel

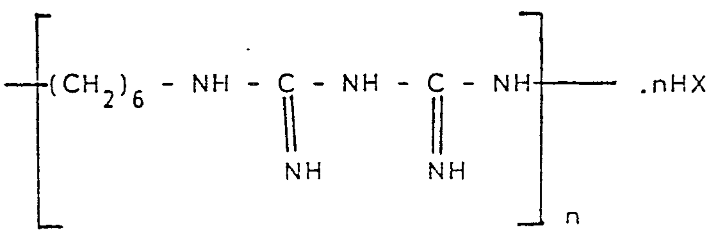

(I)

in der HX die salzbildende Säurekomponente und n eine Zahl von wenigstens 2 bedeuten
0,1 bis 5 Gewichtsprozent Komplexbildner für Schwermetallionen
und gewünschtenfalls übliche Zusatzstoffe wie Tenside, Reinigungsverstärker, pH-Regulatoren sowie Duft- und Farbstoffe enthält.

2. Flüssigkonzentrat nach Anspruch 1, dadurch gekennzeichnet, daß es
5 bis 10 Gewichtsprozent Wasserstoffperoxid
3 bis 10 Gewichtsprozent bakterizid wirksame quartäre Ammoniumverbindungen
0,2 bis 1,5 Gewichtsprozent der Oligo-Hexamethylenbiguanidsalze und
0,5 bis 5 Gewichtsprozent Komplexbildner
neben den weiteren Zusatzstoffen enthält.

3. Abwandlung der Zubereitung nach Ansprüchen 1 und 2, dadurch gekennzeichnet, daß sie als gebrauchsfertige Lösungen vorliegen und die Wirkstoffe in den folgenden Mengenverhältnissen enthalten :
0,5 bis 10 Gewichtsprozent (vorzugsweise 0,5-5 Gew.-%) $H_2O_2$
0,01 bis 1 Gewichtsprozent (vorzugsweise 0,05-0,5 Gew.-%) quartäre Ammoniumverbindung
0,01 bis 0,1 Gewichtsprozent (vorzugsweise 0,02-0,1 Gew.-%) der Verbindungen der allgemeinen Formel 1
0,1 bis 5 Gewichtsprozent (vorzugsweise 0,5-5 Gew.-%) Komplexbildner.

4. Flüssigzubereitungen nach Ansprüchen 1 bis 3, dadurch gekennzeichnet, daß durch die Gegenwart der pH-Regulatoren, insbesondere Säuerungsmittel, ein pH-Wert im Bereich von etwa 3 bis 7, insbesondere im Bereich von etwa 4 bis 7 eingestellt ist.

5. Flüssigzubereitungen nach Ansprüchen 1 bis 4, dadurch gekennzeichnet, daß als Säuerungsmittel Borsäure, Phosphorsäure und/oder ihre sauren Salze vorliegen. die insbesondere in Mengen von 0.1 bis 10 Gewichtsprozent, vorzugsweise von 0,1 bis 1 Gewichtsprozent zugegen sein können.

6. Flüssigzubereitungen nach Ansprüchen 1 bis 5, dadurch gekennzeichnet, daß sie bis zu 20

Gewichtsprozent Tenside, vorzugsweise nichtionische Tenside und/oder Amphotenside, enthalten.

7. Flüssigzubereitungen nach Ansprüchen 1 bis 6, dadurch gekennzeichnet, daß sie als Komplexbildner mindestens eine Verbindung aus der Gruppe Alkanpolyphosphonsäuren, Aminopolyphosphonsäuren, Hydroxyalkanpolyphosphonsäuren, Phosphonocarbonsäuren, Aminopolycarbonsäuren und deren Alkalimetallsalze enthalten.

8. Flüssigzubereitungen nach Ansprüchen 1 bis 7 dadurch gekennzeichnet, daß Oligo-Hexamethylenbiguanidsalze vorliegen, die ein mittleres Molekulargewichtder Aktivsubstanz von etwa 900 bis 1300 aufweisen und insbesondere als Hydrochlorid zugegen sind.

## Claims

1. A disinfectant concentrate having a broad-band effect against gram-positive and gram-negative bacteria based on an aqueous or aqueous-organic mixture — stabilized with complexing agents — of hydrogen peroxide with quaternary ammonium compounds and, if desired, other additives, characterized in that it contains

1 to 15 % by weight hydrogen peroxide

1 to 15 % by weight bactericidal quaternary ammonium compounds

0.1 to 3 % by weight oligohexamethylene biguanide salts corresponding to the following general formula

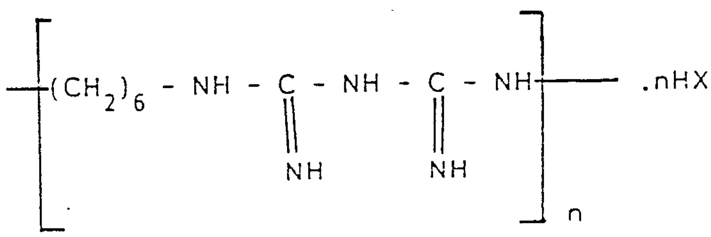

(I)

in which HX is the salt-forming acid component and n is a number of at least 2

0.1 to 5 % by weight complexing agent for heavy metal ions

and, if desired, typical additives, such as surfactants, cleaning boosters, pH regulators and also perfumes and dyes.

2. A liquid concentrate as claimed in claim 1, characterized in that it contains

5 to 10 % by weight hydrogen peroxide

3 to 10 % by weight bactericidal quaternary ammonium compounds

0.2 to 1.5 % by weight oligohexamethylene biguanide salts and

0.5 to 5 % by weight complexing agents

in addition to the other additives.

3. A modification of the preparation claimed in claims 1 and 2, characterized in that they are present in the form of ready-to-use solutions and contain the active substances in the following quantities :

0.5 to 10 % by weight (preferably 0.5 to 5 % by weight) $H_2O_2$

0.1 to 1 % by weight (preferably 0.05 to 0.5 % by weight) quaternary anmonium compound

0.01 to 0.1 % by weight (preferably 0.02 to 0.1 % by weight) compounds corresponding to general formula 1

0.1 to 5 % by weight (preferably 0.5 to 5 % by weight) complexing agents.

4. Liquid preparations as claimed in claims 1 to 3, characterized in that a pH value in the range from about 3 to 7 and more especially in the range from about 4 to 7 is adjusted through the presence of the pH regulators, more especially acidifiers.

5. Liquid preparations as claimed in claims 1 to 4, characterized in that boric acid, phosphoric acid and/or acidic salts thereof are present as acidifiers, more especially in quantities of from 0.1 to 10 % by weight and preferably in quantities of from 0.1 to 1 % by weight.

6. Liquid preparations as claimed in claims 1 to 5, characterized in that they contain up to 20 % by weight surfactants, preferably nonionic surfactants and/or amphoteric surfactants.

7. Liquid preparations as claimed in claims 1 to 6, characterized in that they contain at least one compound from the group comprising alkanepolyphosphonic acids, aminopolyphophonic acids, hydroxyalkanepolyphosphonic acids, phosphonocarboxylic acids, aminopolycarboxylic acids and alkali metal salts thereof as complexing agent.

8. Liquid preparations as claimed in claims 1 to 7, characterized in that the oligohexamethylene biguanide salts present have an average molecular weight of the active substance of from about 900 to 1300 and are present in particular as hydrochloride.

## Revendications

1. Concentré d'agents désinfectants à large spectre d'activité vis-à-vis des bactéries Gram positif et négatif, à base d'un mélange aqueux ou aqueux-organique de peroxyde d'hydrogène avec des composés ammonium quaternaire et au besoin échéant d'autres additifs, stabilisé par des agents complexants et caractérisé en ce qu'il renferme

1 à 15 pour cent en poids de peroxyde d'hydrogène

1 à 15 pour cent en poids de composés ammonium quaternaire à pouvoir bactéricide

0,1 à 3 pour cent en poids de sels d'oligo-hexaméthylènebiguanide de formule générale

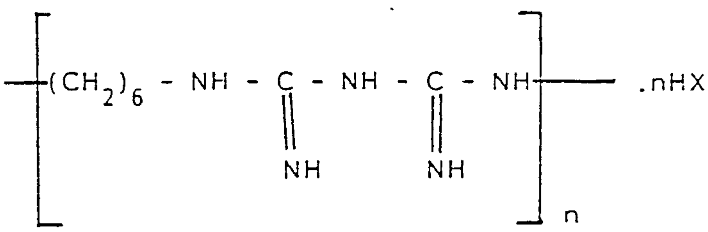

(I)

dans laquelle HX représente la composante acide salifiable et n un nombre d'au moins 2

0,1 à 5 pour cent en poids d'agents complexants pour les ions des métaux lourds

et si besoin est, des additifs usuels tels que tensio-actifs, renforçateurs de nettoyage, régulateurs de pH, ainsi que substances odoriférantes et colorants.

2. Concentré liquide selon la revendication 1, caractérisé en ce qu'il renferme

5 à 10 pour cent en poids de peroxyde d'hydrogène

3 à 10 pour cent en poids de composés ammonium quaternaire à pouvoir bactéricide

0,2 à 1,5 pour cent en poids de sels d'oligo-hexaméthylènebiguanide et

0,5 à 5 pour cent en poids d'agents complexants plus les autres additifs.

3. Variantes de la préparation selon les revendications 1 et 2, caractérisée en ce qu'elles se présentent comme des solutions prêtes à l'emploi et contiennent les substances actives dans les proportions suivantes :

0,5 à 10 pour cent en poids (de préférence 0,5 à 5 % en poids) d'$H_2O_2$

0,01 à 1 pour cent en poids (de préférence 0,05 à 0,5 % en poids) de composés ammonium quaternaire

0,01 à 0,1 pour cent en poids (de préférence 0,02 à 0,1 % en poids) des composés de la formule générale 1

0,1 à 5 pour cent en poids (de préférence 0,5 à 5 % en poids) d'agents complexants.

4. Préparations liquides selon les revendications 1 à 3, caractérisés en ce que leur pH est ajusté dans l'intervalle de 3 à 7, en particulier dans l'intervalle de 4 à 7, grâce à l'addition de régulateurs de pH, en particulier d'agents acidifiants.

5. Préparations liquides selon les revendications 1 à 4, caractérisées en ce que sont présents en tant qu'agents acidifiants, l'acide borique, l'acide phosphorique et/ou leurs sels acides, qui peuvent être contenus en particulier en quantités de 0,1 à 10 pour cent en poids, de préférence de 0,1 à 1 pour cent en poids.

6. Préparations liquides selon les revendications 1 à 5, caractérisées en ce qu'elles renferment jusqu'à 20 pour cent en poids de tensio-actifs, de préférence des agents de surface non ioniques et/ou ampholytes.

7. Préparations liquides selon les revendications 1 à 6, caractérisées en ce qu'elles renferment comme agents complexants, au moins un composé du groupe acides alcanepolyphosphoniques, acides aminopolyphosphoniques, acides hydroxyalcanepolyphosphonique, acides phosphonocarboxyliques, acides aminopolycarboxyliques et les sels de métaux alcalins de ceux-ci.

8. Préparations liquides selon les revendications 1 à 7, caractérisées en ce qu'elles contiennent des sels d'oligohexaméthylènebiguanide, qui présentent un poids moléculaire moyen de substance active d'environ 900 à 1300 et sont présents en particulier comme chlorhydrates.